# EUROPEAN PATENT APPLICATION

(11) **EP 4 015 482 A1**
(43) Date of publication of application: **22.06.2022**
(21) Application number: 21214749.0
(22) Date of filing: 15.12.2021
(51) Int. Cl.: C04B 28/04, C04B 14/10, B33Y 70/00, B28B 1/00, C04B 111/00

(54) **UTILIZING UNPROCESSED CLAY IN THE THREE DIMENSIONAL ADDITIVE PRINTING OF MORTAR ONTO A BUILDING STRUCTURE**

(30) Priority: 17.12.2020 US 202063126761 P
(71) Applicant: Icon Technology, Inc., Austin, TX 78745 (US)
(72) Inventor: Kupwade-Patil, Kunal, Austin, TX (US); Markendaya, Ananya, Austin, TX (US); Le Roux, Alexander, Austin, TX (US)
(74) Representative: K&L Gates LLP

(57) **Abstract**

A 3D printable clay-based mortar cementitious ink includes a blend of commercially available Type I/II Portland cement, and a fine and coarse silica sand. The ratio of Portland cement to fine sand or fine clay, may be approximately 1.02 . The ratio of water to binder (Portland cement and SCM) may be approximately 0.55, and the ratio of water-to-powder (binder plus fine clay smaller than 75 microns) can be approximately 0.416. The fine clay within the aggregate material is unprocessed, and the binder material is approximately 84 to 90 percent cement and 10 to 16 percent SCM. An admixture, including a water reducing admixture, can also be included in the mix.

## Description

### BACKGROUND

This disclosure is generally directed to three-dimensional (3D) printing of building structures. More particularly, this disclosure is directed to printable unprocessed clay-based mortar for use with a 3D printing system.

Cement and other forms of concrete have played an integral role in the construction of any large-scale building structure. In a typical use case, cement can be mixed off-site and away from the construction project, and then transported by a truck to the construction site. Alternatively, cement may be mixed on-site and pumped up to a desired floor for delivery. In either instance, forming the walls of the structure involves pouring the cement at the desired location and then utilizing skilled laborers to frame and drywall the walls.

Three-dimensional (3D) printing of the walls can utilize fewer skilled laborers, and can form the walls in a more cost effective and rapid fashion. In such 3D printing, specialized equipment is used to deposit a cement layer, alternatively known as a "bead", at a specific location using a degree of precision, one bead on top of the other. The inner or outer wall is therefore additively printed, by applying beads on top of one another, beginning with the foundation upward. Bead printing stops at the window or door locations, to leave openings for subsequently placed windows and doors. The process of additively printing, layer-by-layer of beads is oftentimes referred to as the 3D additive printing process, and which has been proven to reduce the overall labor, expense and cost in producing a building structure.

One problem with printing 3D of cement, or any pumping of cement for that matter, is the fluid mechanics associated with cement. Cement is typically a rather viscous fluid and difficult to pump across long distances of piping and/or through various piping structures, such as bends and nozzles of the printing assembly. Any temperature changes, or other environmental factors can further affect the viscosity of cement, making pumping and printing thereof more difficult.

Mortar and cement are commonly used in construction of structures. Cement is a fine powder of primarily hydraulic calcium silicates that hardens when water is added to form durable structures. Cement may also include limestone, clay, shells, and silica sand. Mortar, which is different from concrete, typically includes lime, sand and cement, and is typically used to hold building components, such as bricks, stones, and concrete blocks, together to form a structure. Like the beads of cement used to form a wall, beads of mortar can be printed across bricks, stones, and concrete blocks already present to form the wall structure. After the bricks are applied to the underlying bead of mortar, another layer of mortar is printed as a bead across the row of cast bricks, stones, and concrete blocks to hold those components together in the wall.

A need exists for a printable cementitious ink of mortar that can be readily applied from the printing assembly onto building components with proper viscosity, strength, and slump loss utilizing readily available fine sand or clay.

### SUMMARY

To meet the needs noted above and others, the present disclosure provides a 3D printable clay-based mortar cementitious ink ("printable mortar") that achieves the target structural performance while reducing greenhouse emissions, and also while utilizing readily available fine sands, or clay. The printable clay-based mortar includes an additive material comprising unprocessed clay and sand. The mortar can also include a binder material comprising, according to one example, between 84 to 90 percent cement and 10 to 16 percent supplementary cementitious material. The 3D printable clay-based mortar can further comprise an admixture selected from the group consisting of an air-entraining admixture, a water reducing admixture or plasticizer and a shrinkage reducing admixture. The water reducing admixture can comprise cations and organic molecules, and polycationic compounds configured for clay absorption and dispersion. The supplementary cementitious material can comprise natural or artificial pozzolan material. A popular natural pozzolan material can include siliceous and aluminous material. A popular artificial pozzolan material can be kaolin clays of metakaolin, fly ash and silica flume.

Three-dimensional (3D) printing systems require a cement "fluid" that has appropriate workability and rheological properties as it is pumped through the pipe and out of the print head opening. The ensuing bead of mortar is typically only a few inches in thickness and of sufficient width to cover the print line of bricks and blocks that must be mortared together. The cementitious ink must therefore not only have the proper viscosity, but also must have the appropriate dry ingredients that, when added to the aggregate (typically sand) takes on the appropriate slump loss during the appropriate timeframe.

It is important that the binder material added to the sand aggregate not only be chosen with the correct types of materials and the correct ratios and volumes, but also that appropriate supplementary cementitious materials (SCM) be utilized in the binder, with appropriate admixtures also applied to the binder either before or after mixing with the aggregate. If the appropriate materials and percentages thereof are chosen to achieve the appropriate slump loss for 3D printing, then it is further desirable that readily available fine sand or clay be added to that mix.

Typically, sand aggregate includes smaller particles or fine particles of sand along with coarse particles. The fine particles of sand are oftentimes referred to as "clay." Clay, contained in the sand aggregates, can be used for making mortar cement. However, clay often causes poor workability in fresh cement. This is most certainly the case when clays are used from the sand aggregate when attempting to 3D print mortar. Clays are generally considered too expansive when wetted with water, and they typically absorb or entrap too much water, making any clay-bearing mortar unworkable in 3D printing. This is primarily due to too great of slump retention, and the ensuing mortar being too wet for application as mortar beads across the printed wall. In addition, expansive clays are known to impede the performance of certain admixtures, and specifically the water-reducing admixtures known as plasticizers. While plasticizers are intended to absorb onto cement particles and to disperse then within the aqueous slurry or paste, expansive clays in the aggregate will deleteriously interfere with this function.

Accordingly, when clays are used in printed mortar, they typically are removed or washed off from the more coarse sand aggregate. One way in which to remove or wash off the clays is to sift the finer particulate matter of the clays from the sand, and discard the clays from the sand before the aggregate is added to the cementitious paste. Removing the fine clays that are prevalent in most all sand aggregate is both time consuming and expensive, and hereby is eliminated resulting in the ability to utilize unprocessed clay in a 3D additive printing of mortar onto a building structure.

In light of the disclosure herein, and without limitation of the scope of the invention in any way, in a first aspect of the present disclosure, which may be combined with other aspects listed herein unless specified otherwise, a 3D printable clay-based mortar includes an aggregate material comprising unprocessed clay and sand, as well as a binder material comprising certain specific percentages of cement and supplementary cementitious material.

In another aspect of the present disclosure, which may be combined with any other aspect listed herein unless specified otherwise, is supplementary cementitious material (SCM) that comprises natural or artificial pozzolan material. Admixture also be added, and is preferably selected from the group consisting of an air-entraining admixture, a water reducing admixture or plasticizer, and a shrinkage reducing admixture. The water reducing admixture can comprise cations and organic molecules polycationic compounds for clay absorption and dispersion.

According to another aspect of the present disclosure, which may be combined with any other aspect listed herein unless specified otherwise, the unprocessed clay is not subject to heating, mechanical processing or separation, or chemical reaction for addition. The unprocessed clay is a first material less than 75 microns in dimension, and the sand is a second material greater than 75 microns in dimension. The ratio of first material to second material is between 15 to 20 percent.

In another aspect of the present disclosure, which may be combined with any other aspect listed herein unless specified otherwise, the cement can comprise Type I or II Portland cement and ground calcium carbonate. The binder material added to the unprocessed clay comprises powder material. The water to binder ratio is preferably 0.54 to 0.56. The water to powder ratio is between 0.415 to 0.417. According to one example, the binder material added to the unprocessed clay comprises powder material.

In yet another aspect of the present disclosure, which may be combined with any other aspect listed herein unless specified otherwise, the printable mortar includes a mixture of an aggregate comprising unprocessed clay with a binder comprising cement and supplementary cementitious material, as well as an admixture and water to produce a slump loss of less than 3.0 cm within the first hour, and more preferably less than 2.0 cm within the first hour. The ratio of cement to unprocessed clay is 1.02.

Additional features and advantages of the disclosed 3D printable clay-based mortar material and the devices, systems and methods for forming such material are described in, and will be apparent from, the following detailed description and the figures. The features and advantages described herein are not all inclusive and, in particular, many additional features and advantages will be apparent to one of ordinary skill in the art in view of the figures and description. Also, any particular embodiment does not have to have all of the advantages listed herein. Moreover, it should be noted that the language used in the specification has been selected for readability and instructional purposes, and not to limit the scope of the invented subject matter.

### BRIEF DESCRIPTION OF THE FIGURES

For a detailed description various examples, reference will now be made to the accompanying drawings.
Fig. 1 is a system diagram of a 3D printing system for printing the clay-based mortar, according to an example embodiment of the present disclosure;
Fig. 2 is a graph of slump loss over time for different mixtures of aggregate and binder as well as different water-to-binder and water-to-powder ratios;
Fig. 3 is a table of the different mixture of aggregate and binder, and the makeup of each; and
Fig. 4 is a flow diagram of unprocessed clay within the sand aggregate of combined with cementitious paste of cement and supplementary cementitious material binder to achieve the appropriate slump loss overtime needed for 3D printing of clay-based mortar.

### DETAILED DESCRIPTION

Certain embodiments described herein relate generally to the field of 3D printing systems for printing clay-based mortar cementitious ink ("printable mortar"). The printable mortar described herein has particular fluid parameters such as a certain viscosity and setting time that allow for 3D printing. Additionally, printable mortar differs from traditional cementitious ink in that the printable mortar includes with the aggregate material unprocessed clay. The unprocessed clay is defined as the part of the sand aggregate that has sufficiently small dimension so that approximately 17 percent of the sand aggregate will pass through 75 micron sieve, and that so-called high clay sands would surpass the normal limit of 7 percent within the aggregate per ASTM C33 specification for use in concrete. The high clay sands are used in the aggregate, including the unprocessed clay within the sands. The fine sands or clay is not washed or discarded from the aggregate, but instead is used within the mixed aggregate that forms the mortar. The unprocessed clay is unprocessed in that there is no heating of the clay to form calcined clay, nor is the unprocessed clay subject to any chemical additives or reactions to change its composition or state.

Conventional 3D printing systems may implement a pumping system, whereby the fluid is required to pass through an extended line of pipe, or substantial lengths and through various gate types, bends, nozzles, valves and the like. The cement picture or printable mortar must be sufficiently fluid and have a particular viscosity to allow for a movement through the system. Additives are used to adjust or modify the viscosity of the cement or mortar mixture, such mixture including unprocessed fine sand or clay. Mixture that includes the clay-based sand must also have the proper slump loss so that when it is extruded from the nozzle of an elongated bead, layer by layer vertically upper to form the wall, the bead maintains its appropriate thickness and does not unduly slump. Any slump loss exceeding a certain limit or if slump loss is unduly retained, the mixture that is extruded will no longer be appropriately extruded or thereby printed on the bricks, etc. in a 3D fashion. The printed mortar can therefor include different dry ingredients with the cement binder, and those ingredients can include Portland cement, fly ash, limestone fines, silica flume, and other fluid or liquid-based admixtures.

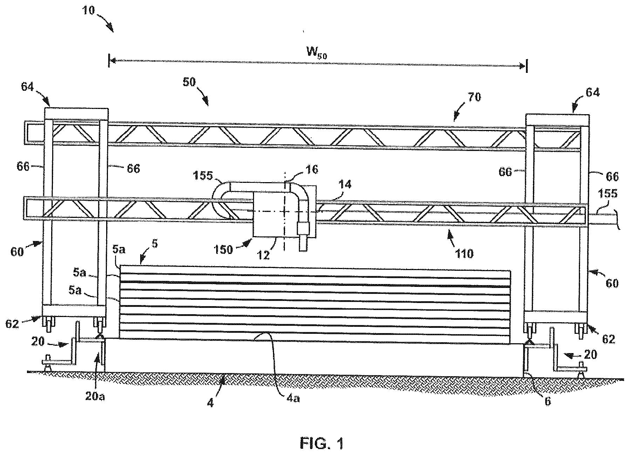

Referring now to Fig. 1, an exemplary construction system 10 is shown. In this embodiment, the construction system 10 generally includes a pair of rail assembles 20, a gantry 50 moveably disposed on rail assemblies 20, in a printing assembly 150 moveably disposed on gantry 50. The construction system 10 is configured to form a structure 5 (such as for example a personal dwelling) via additive manufacturing of beads 5a one on top of the other using 3D printing on a foundation 4. In particular, construction system 10 (via rail assembles 20 and gantry 50) is configured to controllably move or actuate printing assembly 150 relative to the foundation 4 along each of a plurality orthogonal movement axis or directions 12, 14, 16 such that printing assembly 150 may controllably deposit an extrudable building material in a plurality of vertically stacked layers 5a (elongated beads) to form structure 5.

Construction system 10 effectuates the construction of the structure 5 by passing the printing assembly 150 above the foundation 4 and a wall formed layer-by-layer upward from the foundation 4. The printing assembly 150 emits extruded building material from a nozzle comprising an outlet. Accordingly, as printing assembly 150 moves in three possible orthogonal axis, as well as angles therebetween, the outlet emits extruded building material onto the upper surface of the structure 5 as it is being formed. The wall structure is formed layer-by-layer by laying down an elongated bead 5a of cementitious or mortar material of cement or concrete beginning with the first layer on ground or a pre-existing foundation 4. As each layer of the elongated beads 5a are laid down onto the foundation 4 or onto a previous layer or bead 5a, a plurality of stacked elongated beads 5a of an extruded building material additively, and in three-dimensions, form a building structure 5. The printing assembly 150 may shut off delivery of extruded material in order to switch cementitious or mortar ink and/or nozzles printing different cementitious or mortar inks.

The presently disclosed 3D printable clay-based mortar includes a blend of commercially available cement within the binder (i.e., Type I or II Portland cement) with sand. The sand, which is the aggregate, is bound together when mixed with the binder. When also mixed with water, the above-noted dry components of binder and aggregate, when mixed at a specific ratio, form the printable mortar suitable for pumping, extrusion, and stacking the multiple layers using 3D printing.

The printable mortar differs from traditional cementitious ink in that the mortar includes approximately 13 percent less, or between 10 and 16 percent less cement. In one embodiment, the printable mortar includes supplementary cementitious material (SCM) of natural and artificial pozzolans. The pozzolans of the SCM can include siliceous and aluminous material. The pozzolans can react with the calcium hydroxide or crushed limestone or lime that can be added to the Portland cement. To form calcium silicate hydrate, similar to the production by hydration of Portland cement. This adds to the strength, impermeability and sulphate resistance, while reducing expansion from the alkali-silica reaction that might otherwise take place. Use of pozzolans can also modify the water demand within the mixture to achieve the appropriate slump retention or loss rate.

SCM, such as pozzolans, thereby provide a number of advantages to the printable mortar. Improvement in shape retention and stacking of layers can occur at relative shorter times. The printable mortar has a relatively high "green strength," referring to the ability to extrude while coming out of the nozzle and the ability to stack layers while the printable mortar is relatively plastic. A high green strength corresponds to better inner layer adhesion. The printable mortar can accommodate shorter lift times with high initial fluidity, allowing for the structure to be built more quickly.

SCM in the binder at the appropriate percentage relative to Portland cement, in addition to fine sized clay in the aggregate, when mixed with water reacts with water and therefor contributes to the strength and impermeability of the final structure. The dry components, such as cement and SCM constitute the binder material of the printable mortar. The binder material reacts with the aggregate, which comprises both coarse and fine sized sand to form printable mortar if relative percentages of cement to SCM in the binder and fine and coarse sand in the aggregate are followed.

Most natural or artificial sand contains fine silica particles. While natural sand often contains less than 5 percent of material finer than 75 micron sieves, manufactured sand usually has 10 percent to 20 percent material finer than 75 microns. Whether manufactured or in their natural state, sands therefore contain deleterious clay minerals. Those clays are present as hydrous aluminum phyllosilicates and contain tetrahedral or octahedral sheets. Clays can exhibit surface chain charges and have very fine particle size, some of which are less than 2 microns. Expansive and non-expansive clays can negatively impact concrete behavior by increasing the amount of water needed for achieving the desired concrete rheology. Expansive clays generally have a greater influence on concrete rheology than non-expansive clays because they can expand and consume free water from the concrete mixture. Thus, conventional processing techniques are used to remove the fine sands or clays that would normally expand and consume free water from the mixture. However, according to one embodiment herein, the fine sands or clay within the sand aggregate itself are maintained and kept in the mixture. Any deleterious effects of that fine sand or clay are offset using an appropriate SCM within the binder. Moreover, liquid or fluid admixtures can also be inserted into the mixture.

In a preferred embodiment, the percentage of Portland cement to SCM is approximately 87 percent Portland Cement and 13 percent SCM. This type of binder system can also produce a dense microstructure that has a lower environmental impact in that no calcined clay is needed, and thus no heating or processing of the clay is needed. The dense microstructure results from the addition from possibly calcium carbonate, if needed, in hydration of the unprocessed clay. In place of typical limestone, the printable mortar may also include a blend of limestone and marble dust. The combination of unprocessed clay and fine limestone (if applied and mixed therein) also improves the green strength, and improves stacking of layers during the plastic stage. Action of the binder system is controlled by the addition of further chemical admixtures, if needed. The chemical admixtures, such as plasticizers or water-reducers help delay the initial setting of the mix, increasing the open time where more layers can be added without cold joints despite the elevated ambient temperatures.

The printable mortar includes a ratio of Portland cement to fine sand, or clay, of approximately 1.02. The components also have a ratio of water to binder of approximately 0.55 and water to powder of approximately 0.416. Binder is defined as Portland cement and SCM, whereas powder is defined as binder plus fine sand or clay smaller than 75 microns, where preferably more than 17% of the sand will pass through a 75 micron opening within a sieve as find sand or clay. In a preferred embodiment, the 3D printable mortar includes liquid admixtures, such as high range water reducers, a slump retention admixture, a shrinkage reducing admixture, a hydration stabilizer, and an air-entraining agent.

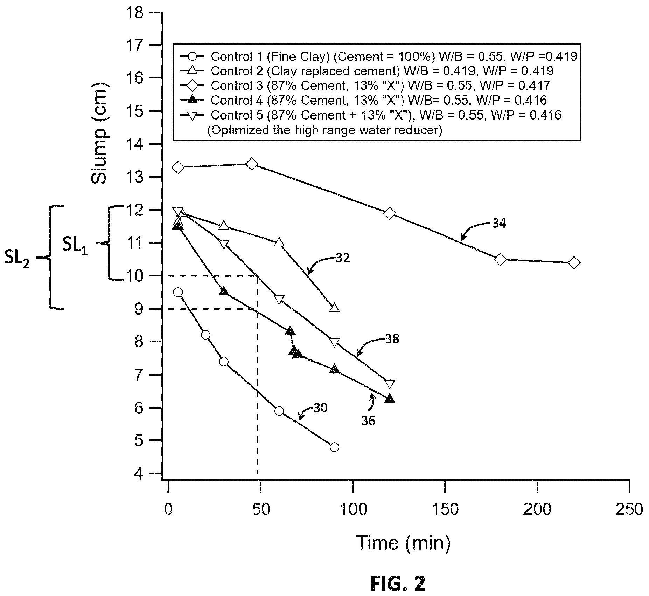

Fig. 2 illustrates different control examples or samples under a different combination of binder aggregates, and specifically illustrates slump loss overtime for each such control sample. Slump testing is formed on each control sample. As known to those skilled in the art, slump testing measure the consistency of fresh concrete or cement before it sets. It is performed to check the workability of the freshly made cement, and therefore the ease with which concrete or cement flows. It can also be used as an indicator of an improperly mixed batch. There are different ways in which to perform a slump test such as use of an automated slump meter with sensors and control to enable the meters to measure the displaced slump. A slump test can also mechanically performed using a slump cone. After removing the cone, the resulting changed shape of the concrete profile is measured. A true slump taken from the top of the ensuing concrete within the slump cone, over time, is measured to determine any slump loss. Slump therefore basically measures the consistency of fresh cement paste within the concrete and thus the efficiency by which the binder operates.

As show in Fig. 2, control 30 line demonstrates slump over time for a first control sample when the aggregate portion comprised both sand as well as fine sand or clay. The fine sand is that which has approximately 17 percent of the material passing through a 75 micron sieve. Thus, the control 30 sample had waste clay that is normally removed from the sand. The binder remained 100 percent cement with the water-to-binder ratio being 0.55 and the water-to-powder ratio being 0.419. The slump loss rapidly decreased from 9.5cm to 4.8cm in approximately one hour. Given the width of an extruded bead being approximately 1-2 inches, a slump loss of approximately 4cm (10 inches) makes control sample 30 unsuitable for 3D printing.

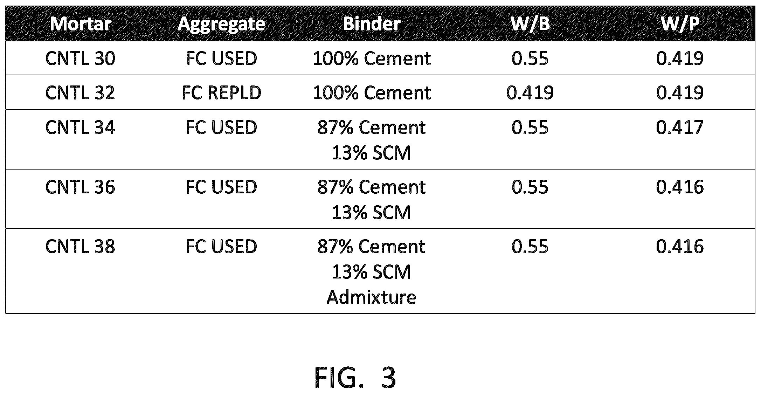

Figs. 2 and 3 also illustrate control sample 32 having the fine clay within the aggregate replaced or mechanically processed with Portland cement by weight. The binder remained 100 percent cement with the water-to-binder ratio decreasing to 0.419 and the water-to-powder ratio remaining the same at 0.419. With more binder being used to replace the fine clay, the water-to-binder (W/B) decreased in the control sample 32, with the slump dropping from approximately 11.6cm to 11.0cm between 5 minutes and 60 minutes as shown. For control sample 32, the sand had been processed by removing the fine clay from the sand aggregate. SCM is added to make sample 32 suitable for 3D printing (i.e., a slump loss of .6cm is approximately 1 inch bead thickness).

The control sample 34 uses the fine clay within the aggregate, and modified the binder ratio between cement and SCM so that approximately 87 percent Portland cement is used relative to 13 percent SCM. The powder increased since fine sand is utilized in control sample 34. Unfortunately, there is too much slump retention due to the slump values in the range of 13cm for almost an hour, which makes the material too wet as printable mortar since the printable mortar would not retain its shape and thus hinder the stack ability of the beads.

The target slump is approximately one inch slump loss between 10 and 12 cm during a first hour for suitability of 3D printing. Thus, several iterations were performed by adjusting the high range water reducer and water-to-powder (W/P) ratio as shown the control sample 36 and control sample 38. The water-to-powder ratio is reduced to approximately 0.416 and the control sample 36 by using fine clay sand and including approximately 13 percent SCM into the binder. Control sample 36 therefore demonstrates a slump loss between 5 minutes and 60 minutes of approximately 12cm to approximately 9cm, which is a little over 1 inch slump loss. Ideally, slump loss should be 1 inch or less, and control sample 38 achieves the 1 inch slump loss target by including with the binder both 13 percent SCM and admixture, such as a water reducer or plasticizer admixture. Control sample 38 is shown as a slump loss (SLi) of approximately 2.24cm from 12cm to 9.75cm to achieve the target 1 inch slump loss suitable for 3D printable mortar.

According to one example, a water reducing admixture is applied to the binder for retaining slump, while fine clays are maintained and unprocessed within the sand aggregate. The admixture clay-activity-modifying agents include cations that help increase use of clay-containing sands to offset the decline in high quality natural or artificial sands. A popular water reducing admixture includes chemical and mineral admixtures available in the industry from various vendors.

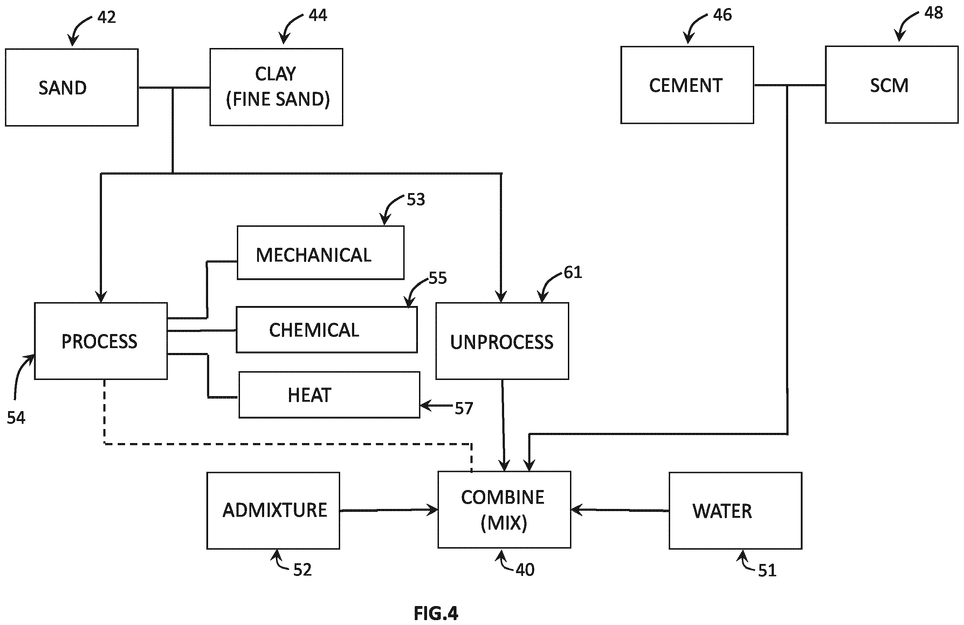

Fig. 4 illustrates a flow diagram of mixing 40 aggregate containing sand 42 and fine clay or fine sand 44, as well as binder cement (Portland cement and SCM 48). The aggregate and binder materials are combined with water and preferably an admixture 50 and 52, respectively.

The aggregate of sand containing fine sand or fine clay can be processed. Specifically, the fine clay 44 can be processed 54 either mechanically, chemically or heated 53, 55 and 57. If heated, or calcined, the clay is converted to calcined clay. Alternatively, the clay can be removed by a mechanical sieve. Further alternative would include adding a chemical to the clay to change its properties. Alternatively, and preferably, the fine clay is not processed, and therefore is unprocessed 61, and therefore the aggregate in its entirety is passed unprocessed 61 to a mixing unit where the binder, water and chemical or admixture is added. Unprocessed fine clay with the aggregate, and also containing the components added thereto in Fig. 4 can produce the control sample 36 and more preferably the control sample 38 of Fig. 3 to achieve the appropriate slump loss for 3D printing of mortar.

As used in this specification, including the claims, the term "and/or" is a conjunction that is either inclusive or exclusive. Accordingly, the term "and/or" either signifies the presence of two or more things in a group, or signifies that one selection may be made from a group or alternatives.

Without further elaboration it is believed on skilled in the art can use the proceeding description to utilize the claimed inventions to their fullest extent. The examples and embodiments disclosed herein are to be construed as merely illustrative and not a limitation on the scope of the present disclosure in any way. It will be apparent to those skilled in the art that changes may be made to the details of the above-described embodiments without departing from the underlying principles discussed. In other words, various modifications and improvements of the embodiments specifically disclosed in the description above are within the scope of the appended claims. For example, any suitable combination of features of the various embodiments described is contemplative.

## Claims

1. A three dimensional (3D) printable clay-based mortar comprising:
an aggregate material comprising unprocessed clay and sand; and
a binder material comprising between 84 to 90 percent cement and 10 to 16 percent supplementary cementitious material.

2. The mortar of claim 1 is extrudable from a print head opening moveable in three dimensions across a wall of a building structure.

3. The mortar of claim 1, further comprising a water reducing admixture comprising cations and organic molecules and polycationic compounds configured for clay absorption and dispersion.

4. The mortar of claim 1, further comprising an admixture selected from the group consisting of an air-entraining admixture, a water reducing admixture or plasticizer, and a shrinkage reducing admixture.

5. The mortar of claim 1, wherein the unprocessed clay is a material finer than 75 microns in dimension.

6. The mortar of claim 1, wherein the unprocessed clay is a first material less than 75 microns in dimension and the sand is a second material greater than 75 microns, and wherein the ratio of first material to second material is between 15 and 20 percent.

7. The mortar of claim 1, wherein the unprocessed clay is not subjected to heat, mechanical or chemical processing to remove or alter its original state.

8. The mortar of claim 1, wherein the cement comprises Type I/II Portland cement and ground calcium carbonate.

9. The mortar of claim 1, wherein the binder material added to the unprocessed clay comprise powder material.

10. The mortar of claim 1, wherein water to binder ratio is between 0.54 to 0.56, and wherein the water to powder ratio is between 0.415 to 0.417

11. The mortar of claim 1 demonstrates a slump loss of less than about 2.0 cm within the first hour.

12. The mortar of claim 1, wherein the ratio of cement to unprocessed clay may be about 1.02.

13. The mortar of claim 1, wherein the supplementary cementitious material comprises a natural or artificial pozzolan material.

14. The mortar of claim 13, wherein the natural pozzolan material comprises siliceous and aluminous material.

15. The mortar of claim 13, wherein the artificial pozzolan material is selected from the group comprising kaolin clays to obtain metakaolin, fly ash and silica flume.
